Europäisches Patentamt

European Patent Office

Office européen des brevets

(19)

(11) Publication number: **0 106 419**
**A2**

(12) # EUROPEAN PATENT APPLICATION

(21) Application number: **83301175.2**

(22) Date of filing: **04.03.83**

(51) Int. Cl.³: **B 01 D 15/08**
**B 01 J 47/00**

(30) Priority: **11.09.82 GB 8225973**

(43) Date of publication of application:
**25.04.84 Bulletin 84/17**

(84) Designated Contracting States:
**AT BE CH DE FR GB IT LI LU NL SE**

(71) Applicant: **WHATMAN REEVE ANGEL PLC**
**Springfield Mill**
**Maidstone Kent ME14 2LE(GB)**

(71) Applicant: **Bioquic Limited**
**36/40 Jermyn Street**
**London SW1(GB)**

(72) Inventor: **Kimberley, Jeffry Howard**
**27 Haste Hill Road, Boughton**
**Monchelsea Maidstone, Kent(GB)**

(72) Inventor: **Weaver, Victor C.**
**The Brambles, Well Street Loose**
**Maidstone, Kent ME15 0EW(GB)**

(74) Representative: **Harrison, David Christopher et al,**
**MEWBURN ELLIS & CO 2/3 Cursitor Street**
**London EC4A 1BQ(GB)**

(54) Chromatographic column.

(57) A chromatographic apparatus gives increased volume without substantially increased residence time by greatly increasing its diameter in relation to its bed depth. To achieve evenness of fluid flow across this increased width, the inlet arrangement includes a tangentially set inlet pipe (31) opening into a downwardly flaring inlet cone (27) which in turn merges via a rounded transition (22) to a conical underwall (20) of the lid (4) to the barrel (1) of the apparatus.

The apparatus is loaded with its charge of ion-exchange or adsorption material by introduction of that charge through the same inlet (31) in slurry form, followed by the loading of the bed with the material to be separated equally introduced through that inlet (31) followed by flowing of the eluent through that same inlet (31).

EP 0 106 419 A2

## CHROMATOGRAPHIC COLUMN

This invention relates to chromatographic columns and is concerned with columns which are applied to preparative uses, that is to say to the separation on more than a laboratory scale of given products. A particular though not exclusive utility of these columns is in high biopolymers such as proteins or insulin, the nature of the products to be separated governing the choice of the exchange or adsorption material to be placed in the column, for example ion-exchange material, hereinafter "exchange material".

In order to increase the rate of separation and therefore production of the purified product it is conventional to increase the volume of the column. Traditionally this has been done by increasing both its length and its width. We have found, however, that superior results are obtained by primarily increasing the width of the column rather than its length so that we finish up with a comparatively squat and shallow piece of apparatus. The reason for adopting this shape is to avoid unevenness of packing and of flow which arise in long thin columns and also problems which arise due to increased pressure at the base of the column due to the weight of the material itself; this leads to congestion at the base of the column and therefore a need for an increase in the pressure applied to it in order to maintain a given through rate.

A wide and shallow column we find has the advantage of allowing immediate scaling up from laboratory scale processes and also a shorter total residence time in the column which is particularly valuable when labile proteins and the like are being separated and are required to be recovered unchanged after separation.

The comparative width of our model of column does however bring a problem in achieving evenness of packing across its width, and, in particular, evenness of distribution of the input sample and the present invention is concerned with solving these problems.

We are concerned with inlet and distribution arrangements for the liquid to be applied to the column which cause a comparatively even distribution of the liquid over the whole of the free cross-section of the container of the column. We do this by having an inlet into the column, which is a divergent cone mounted on the axis of the column, fed by inlet fluid from a tangentially disposed inlet pipe whereby the inlet fluid is swirled around the inner surface of the divergent cone. Furthermore, the undersurface of the lid of the container of the column has a radiussed transition from an axial inlet port to a conical undersurface. The cone angle of this conical surface is very large, for example of the order of $80^{\circ}$ to $85^{\circ}$.

The cone angle of the divergent inlet cone on the other hand is of the order of $10^{\circ}$ to $30^{\circ}$, more preferably $15^{\circ}$ to $25^{\circ}$. The inlet cone may form an immediate transition into the radiussed exit from the port or there may be an intermediate cylindrical portion of that port.

There is preferably also a radiussed transition from the outer edge of the conical surface of the lid to a cylindrical sidewall of the container and the radius of curvature of this transition may be greater than the radius of curvature of the first mentioned transition.

We find that this arrangement leads to a substantially even distribution of fluid across the cross-section of the free volume of the column.

One of the important features of the present invention is that this flow pattern allows us to pack the column with the exchange or adsorption material, not by pouring it in randomly followed by manual consolidation or tamping, but rather by introducing the material charged in a flow of liquid introduced as a slurry through the fluid inlet. We find that the flow pattern set up within the column results in an even disposition of the material over the whole of the cross-section of the column and of an even packing resulting ultimately in even flow through the column. It is furthermore an advantage that, when the sample is introduced through the inlet, it undergoes substantially the same flow pattern as the slurry which introduced the exchange or adsorption material and any unevennesses in the distribution of that material will be reproduced in unevennesses of distribution of the sample to be treated by that material. We further find that there is a complete avoidance of any "wall effects", that is to say the excessive or insufficient packing of the bed adjacent to the surrounding walls resulting in either preferential but inadequately treated flow paths or the blocking of flow paths. Furthermore, for the elution of the sample from the material once charged with it the same flow pattern of the eluent will occur through the same inlet.

The present invention also relates to a method of charging a chromatographic column and subsequently operating it, which method involves introducing the exchange or adsorption material into the column in slurry form through an inlet into the column whereby it is distributed across the cross-section of the column and subsequently loading the column with the material to be separated or purified by introducing it through the same inlet in solution form, subsequently eluting the sample by introducing eluent through the same inlet, and collecting the separated or purified components at an outlet from the column.

A particular embodiment of the invention will now be described, by way of example, with reference to the accompanying drawings wherein:

Figure 1 is a perspective exploded view of the column;

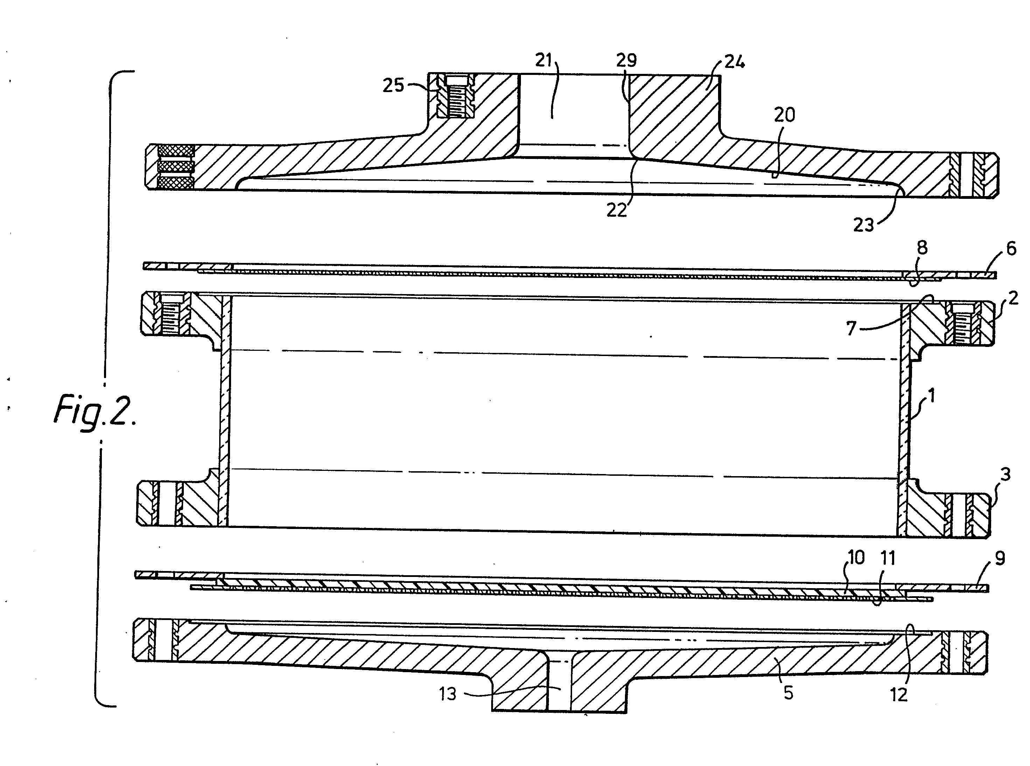

Figure 2 is a diametrical cross-section through the main volume of the column;

Figure 3 is a diametrical cross-section through an inlet nozzle; and

Figure 4 is a section on the line IV-IV of Figure 3.

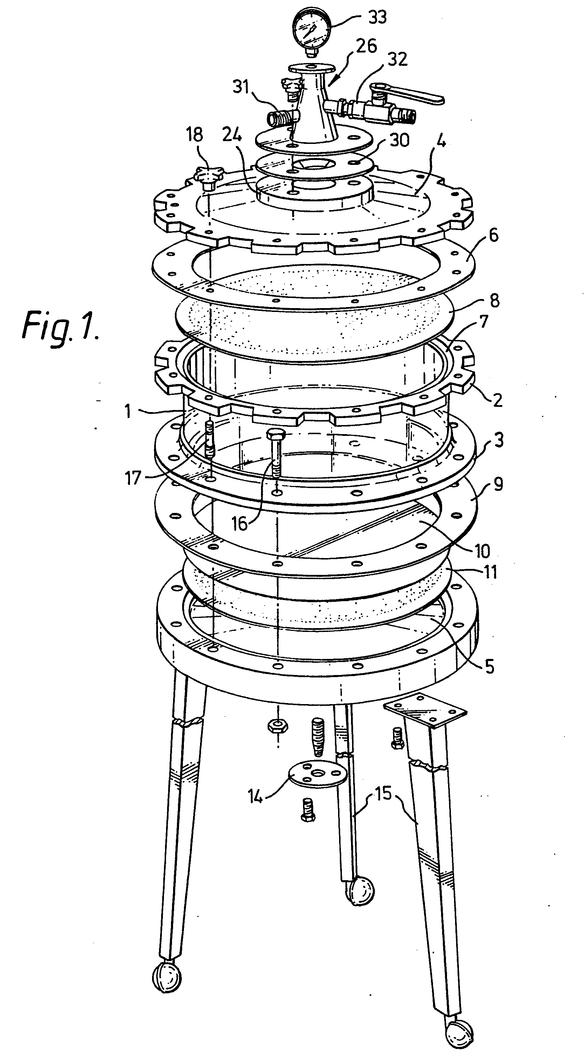

With reference to the view in Figure 1 a chromatographic column has a barrel 1 which may be made of any suitable material such as GRP, stainless steel, or preferably PVC and may in the latter case be made transparent. Upper and lower flanges 2,3 are of GRP or stainless steel and are for securing the barrel to a lid 4 and a base 5 respectively. Interposed between the upper flange 2 and a corresponding flange on the lid 4 is a sealing gasket 6 and underneath that, and fitting in a shallow recess 7 in the flange 2, a stainless steel plate 8 which has a solid rim about a perforated mesh centre portion over the whole of the free cross-sectional area of the inside of the barrel 1. The plate 8 is screwed into the flange 2 by screws (not shown) so that it is positively secured onto it independent of the position of the lid 4 or the gasket 6.

Underneath the barrel 1 and between the flange 3 and a corresponding flange of the base 5 is a further sealing gasket 9, a porous plastic support 10 for the bed of exchange or adsorbent material to be contained within the barrel, and a stainless steel plate 11 similar to stainless steel plate 8 which is to retain the support 10 and which fits into a recess 12 similar to recess 7 but in the base 5.

In the bottom of the base 5 is a central outlet 13 which may be adapted for reception of a hose connection and retainer plate such as 14 (Fig. 1). Also on the base 5 there may be support and transport legs 15 (Fig. 1).

The lower flange 3 is secured to the base by stainless steel nuts and bolts 16 (Fig. 1) but the connection of the flange 2 to the lid 4 needs to be slightly less permanent and is made by screw-threaded inserts 17 set into the flange 2, penetrating corresponding holes in the flange of the lid 4 and tightened down by knobs or butterfly bolts 18 (Fig. 1).

In this way a chromatographic column is formed which has a diameter greater than the depth of the bed of the column.  We suggest the following ratios:
a diameter of 32 units and  a depth of 10 units giving a ratio  of 3.2:1;
a diameter of 45 units and a depth of 16 units which is a ratio of 2.8:1; and
a diameter of 75 units and a depth of 20 units giving a ratio of 3.75:1.
Thus we propose that the ratio of the diameter to the width may be within a range of $2\frac{1}{2}$ to 4, by way of example.

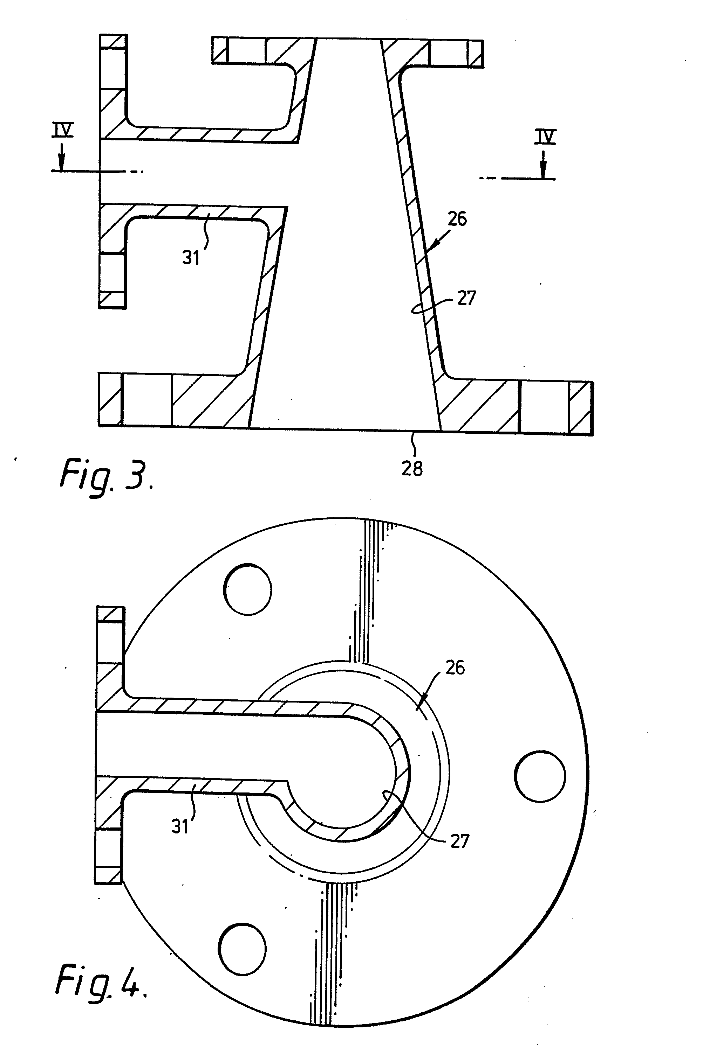

The under-surface of the lid 4 is a frusto-conical surface 20 of which the cone angle is very high, for example of the order of $80^{\circ}$ or $85^{\circ}$.  At the centre of the lid is an inlet port 21 and there is a radiussed transition 22 between the inlet port 21 and the surface 20.  Furthermore, there is another radiussed transition 23 between the surface 20 and the line of continuation of the inner surface of the barrel 1. The radius of curvature of the transition 22 should be smaller than the radius of curvature of the transition 23, for example half the radius of curvature. The inner port 21 is in a boss 24 at the centre of the lid to the upper surface of which is secured, by means of screws fitted into screw-threaded inserts 25 in the boss, an inlet assembly seen in more detail in Figures 3 and 4.

The inlet assembly generally designated 26 has an inner volume which is a downwardly and outwardly divergent cone wall 27, the base of which is of the same diameter as the wall of the inlet port 21. In the present embodiment the inlet port 21 includes a cylindrical transitional portion 29 between the cone 27 and the radiussed transition 22, but the cone may fit directly onto the upper end of the transition 22. A sealing gasket 30 is interposed between the base of the inlet assembly 26 and the upper surface of the boss 24.

The fluid inlet pipe to the inlet assembly is seen at 31 and, as can be seen best from Figure 4, is tangential to the wall 27 of the cone. In this way fluid introduced through the pipe 31 is swirled around the cone diverging downwardly and is spread by the radiussed transition 22 onto the conical surface 20 of the lid. We find that this gives a comparatively even distribution of flow of liquid across the whole of the cross-section of the barrel 1 of the column.

There is also seen in Figure 1, but not shown in Figures 3 and 4, that there may be an outlet pipe 32 taken from the inlet assembly 26 which is provided with a tap for pressure relief, if need be, and at the head of the cone there is fitted a pressure gauge 33, also only seen in Figure 1.

In operation, the assembly is set up clean and filled with water. A slurry of the particulate exchange or adsorption material in water, a buffer or other suitable liquid, is pumped in through the inlet pipe 31 and the outlet of the base is opened. The original water is displaced but due to the flow characteristics of the inlet fluid the particles in the slurry are evenly distributed across the cross-section of the barrel 1 and form an even and evenly packed charge between the porous support 10 and the stainless steel perforated plate 8 (the size of the perforations in that plate, about 5 mm diameter usually, is larger than the size of the individual particles of the material, so that they may pass through it individually). Excess of the charge is fed in so that some is left above the plate 8. The assembly is then partially drained and the lid 4 removed, leaving the plate 8 in position. Excess charge is swept off the upper-surface of the plate and the lid re-assembled.

The assembly is then refilled with liquid, this time by a buffer introduced through the inlet 31 to if necessary equilibriate the material and air is vented through the outlet 32. Then the material to be purified or separated is loaded into the charge by introduction through the inlet 31. Once more there will be evenness of loading due to the flow characteristics of that liquid induced by the inlet assembly and the shape of the under-surface of the lid.

When the sample has been loaded, the eluent is introduced again through the inlet 31 and the desired separation is carried out in the usual way.

We achieve with this column a high flow rate due to its comparatively high volume with a low residence time due to the comparative thinness of its bed and coupled with high resolution of separated materials in the elute as characterised by sharp distribution peaks as observed in ultra-violet absorption spectroscopy, indicating by the sharpness of the peaks the evenness and consistency of the packing of the column.

It is primarily the depth (bed thickness) of the column which determines the time needed for a given separation; therefore a laboratory scale experiment run on a small volume column can be scaled up to high volume in the present type of equipment, even as much as a thousand fold, by virtue of the ratios of the volume of the bed, without substantially affecting the time or other conditions needed for this operation.

0106419

-12-

CLAIMS:

1.      A chromatographic apparatus comprising a vessel for enclosing a bed of exchange or adsorption material, and a lid (4) for closing the top of that vessel, with a fluid inlet (26) at or close to the centre of that lid (4) characterised in that:

the fluid inlet (26) to the lid includes a downwardly opening conical wall (27) supplied by a tangentially directed pipe (31) and the lid (4) has a conical under-surface (20) which leads to an inlet port (21) to be fed from the conical wall (27) around a rounded radiussed transition (22).

2.      A chromatographic apparatus according to Claim 1, wherein there is also a second radiussed transition (23) between the outer surface of the conical wall (20) and the inner wall of the barrel (1) of the apparatus.

3.      A chromatographic apparatus according to Claim 1 or Claim 2, which has a diameter greater than its designed bed depth.

4.      A chromatographic apparatus according to Claim 3, wherein the diameter is between $2\frac{1}{2}$ to 4 times the designed    bed depth.

5.      A chromatographic apparatus according to any one of the preceding Claims, wherein there is a cylindrical inlet port (29) between the transition (22) and the conical wall (27).

6.      A method of operating a chromatographic apparatus according to any one of the preceding Claims which consists of introducing the charge of exchange or adsorption material into the column in the form of a slurry through the inlet (31), subsequently loading the sample to be separated or purified by introducing it in solution through the same inlet (31) and subsequently introducing the eluent for the sample through the same inlet (31).

Fig.1.

1/3

0106419

Fig.2.

Fig. 3.

26

27

31

IV

IV

28

Fig. 4.

26

27

31